(19)

Europäisches
Patentamt
European
Patent Office
Office européen
des brevets

(11) **EP 3 144 159 A1**

(12) **EUROPEAN PATENT APPLICATION**

(43) Date of publication:
**22.03.2017 Bulletin 2017/12**

(51) Int Cl.:
*B60B 3/02* (2006.01)          *B60B 3/08* (2006.01)
*B60C 7/12* (2006.01)          *B60C 7/18* (2006.01)
*B60C 7/08* (2006.01)          *B60C 7/14* (2006.01)

(21) Application number: **16186801.3**

(22) Date of filing: **01.09.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.09.2015   US 201562220036 P**

(71) Applicant: **The Goodyear Tire & Rubber Company
Akron, Ohio 44316 (US)**

(72) Inventors:
• **VAN RIPER, Philip Carl
Cuyahoga Falls, OH 44223 (US)**

• **LETTIERI, Joseph Carmine
Hudson, OH 44236 (US)**
• **BANDY, Rebecca Anne
Cuyahoga Falls, OH 44224 (US)**
• **SIEGEL, Addison Brian
Cuyahoga Falls, OH 44221 (US)**
• **MOGHANI, Mahdy Malekzadeh
Cuyahoga Falls, OH 44221 (US)**

(74) Representative: **Kutsch, Bernd
Goodyear S.A.
Patent Department
Avenue Gordon Smith
7750 Colmar-Berg (LU)**

(54) **NON-PNEUMATIC TIRE**

(57)     A structurally supported non-pneumatic tire (100) comprising a ground contacting annular tread portion (200), a shear band (300) and at least one spoke disk (400) connected to the shear band (300) is disclosed. The spoke disk (400) has at least one spoke (410). At least one or all of the following statements is true for the non-pneumatic tire (100):

(i) the spring rate of the spoke disk (400) is greater than the spring rate of the shear band (300);
(ii) the spoke (410) has a width (W) and an axial thickness (t), the ratio of W/t being in the range of from 15 to 80;
(ii) the spoke (410) has an axial thickness less than the axial thickness of the spoke disk (400).

Fig. 1

## Description

Field of the Invention

The present invention relates generally to vehicle tires and non-pneumatic tires, and more particularly, to a non-pneumatic tire.

Background of the Invention

The pneumatic tire has been the solution of choice for vehicular mobility for over a century. The pneumatic tire is a tensile structure. The pneumatic tire has at least four characteristics that make the pneumatic tire so dominate today. Pneumatic tires are efficient at carrying loads, because all of the tire structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid. A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. "Bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

Thus an improved non pneumatic tire is desired that has all the features of the pneumatic tires without the drawback of the need for air inflation is desired.

Summary of the Invention

The invention relates to a non-pneumatic tire in accordance with claim 1.

Dependent claims refer to preferred embodiments of the invention.

In a preferred aspect of the invention, the spoke disk is a solid annular disk either having no holes or having one or more holes.

In a preferred aspect of the invention, the spoke disk has a plurality of radially oriented spokes.

In a preferred aspect of the invention, the spokes bow under load in the axial direction.

In a preferred aspect of the invention, the spokes are curved.

One or more embodiments of the present invention provide a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the spoke has an axial thickness less than the axial thickness of the spoke disk.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein each spoke disk is located on each axial end of the non-pneumatic tire.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein said spoke disk is a solid annular disk having no holes.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein said spoke disk is a solid annular disk having one or more holes.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the ratio of the axial thickness of the non-pneumatic tire AW to the axial thickness of the spoke disk A is in the range of about 4 to 10, more preferably 6 to 8.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the spokes are angled at an angle alpha with respect to the axial direction in the range of 60-80 degrees.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the ratio W/t of the width W of each spoke to the axial thickness t is in the range 15 to 80 or 30 to 60.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the ratio of the height of each spoke H to the axial thickness t is in the range of about 2.5 to 25.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the spoke radially outer end is axially offset from the radially inner end of the spoke.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the spoke is curved from the radially outer end to the radially inner end.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, wherein the spring rate of the spoke disks is in the range of 4 to 12 times greater than the spring rate of the shear band.

One or more embodiments of the present invention provides a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, wherein said spoke has a rectangular cross-section.

One or more embodiments of the present invention provides a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, 21 wherein said spokes extend in the radial direction.

One or more embodiments of the present invention provides a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, wherein the spring rate of the spoke disk is greater than the shear band spring rate.

One or more embodiments of the present invention provides a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, wherein the spring rate of the spoke disks is in the range of 4 to 12 times greater than the spring rate of the shear band.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, or a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, wherein there are a plurality of spoke disks, and wherein the spring rate of all of the spoke disks is greater than the spring rate of the shear band.

One or more embodiments of the present invention provides a structurally supported non-pneumatic tire comprising a ground contacting annular tread portion, a shear band, and at least one spoke disk connected to the shear band, wherein the spoke disk has at least one spoke, wherein the spring rate of the spoke disk is greater than the spring rate of the shear band, wherein the tire further comprises a second spoke disk, or a non-pneumatic tire comprising a ground contacting annular tread portion, a shear band, and at least one spoke disk connected to the shear band, wherein the spoke disk has one or more spokes, wherein the spoke has a width W and an axial thickness t, wherein the ratio of W/t is in the range between 15 and 80, wherein the spokes are curved.

One or more embodiments of the present invention provides a structurally supported non-pneumatic tire comprising a ground contacting annular tread portion, a shear band, and at least one spoke disk connected to the shear band, wherein the spoke has an axial thickness less than the axial thickness of the spoke disk.

One or more embodiments of the present invention provides a structurally supported non-pneumatic tire comprising a ground contacting annular tread portion, a shear band, and at least one spoke disk connected to the shear band, wherein the spoke has an axial thickness less than the axial thickness of the spoke disk, wherein a spring rate of the spoke disk is greater than a spring rate of the shear band.

One or more embodiments of the present invention provides a structurally supported non-pneumatic tire comprising a ground contacting annular tread portion, a shear band, and at least one spoke disk connected to the shear band, wherein the spoke has an axial thickness less than the axial thickness of the spoke disk, wherein the ratio of the spoke disk axial thickness A to the spoke axial thickness t is in the range of 6 to 11.

Brief Description of the Drawings

The present invention will be better understood through reference to the following description and the appended drawings, in which:

FIG. 1 is a perspective view of a first embodiment of a non-pneumatic tire of the present invention;
FIG. 2 is a perspective view of a spoke disk of the present invention;
FIG. 3 is a schematic cross section view of the spoke disk of Figure 2;

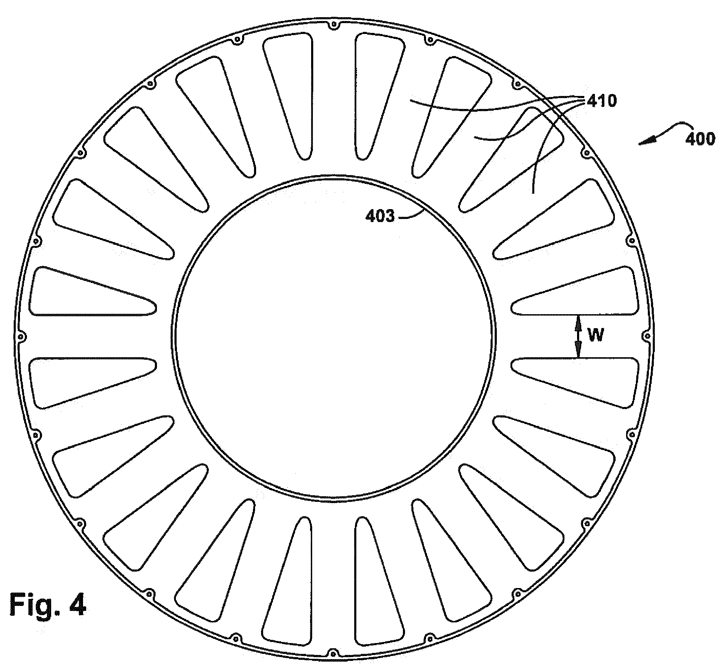

FIG. 4 is a front view of the spoke disk of Figure 2;
FIG. 5 is a cross-sectional view of the non-pneumatic tire of Figure 1;
FIG. 6 is an alternate embodiment of a spoke disk of the present invention;
FIG. 7 is an alternate embodiment of a spoke disk of the present invention;
FIG. 8 is a cross-sectional view of an alternate embodiment of a non-pneumatic tire of the present invention illustrating multiple spoke disks with the same orientation;
FIG. 9 is a cross-sectional view of the non-pneumatic tire of Fig. 1, shown with two spoke disks in opposed orientation so that the spokes bow axially inward when under load.
FIG. 10 is a cross-sectional view of the non-pneumatic tire of Fig. 1 shown with two disk spokes having a different orientation so that the spokes bow axially outward when under load.

FIG. 11 is a cross-sectional view of the non-pneumatic tire of Fig. 1 shown with the disk spokes having a curved cross-section, shown under load.
FIG. 12a illustrates a spring rate test for a shear band, while FIG. 12b illustrates the spring rate k determined from the slope of the force displacement curve.
FIG. 13a illustrates a spring rate test for a spoke disk, while FIG. 13b illustrates the spring rate k determined from the slope of the force displacement curve.
FIG. 14A illustrates a test specimen undergoing shear, while FIG. 14B illustrates the pure shear test.

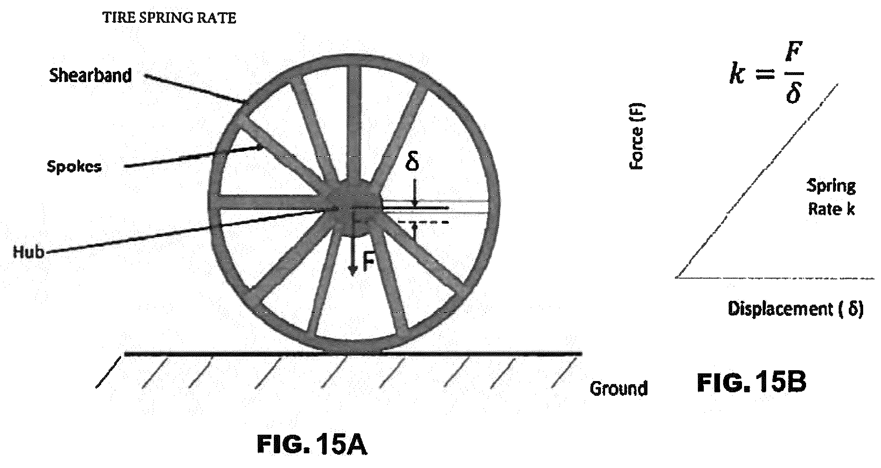

FIG. 15A illustrates a spring rate test for the non-pneumatic tire, while FIG. 15B illustrates the tire spring rate k being determined from the slope of the force displacement curve.

Definitions

The following terms are defined as follows for this description.
"Equatorial Plane" means a plane perpendicular to the axis of rotation of the tire passing through the centerline of the tire.
"Meridian Plane" means a plane parallel to the axis of rotation of the tire and extending radially outward from said axis.
"Hysteresis" means the dynamic loss tangent measured at 10 percent dynamic shear strain and at 25°C.

Detailed Description of Example Embodiments of the Invention

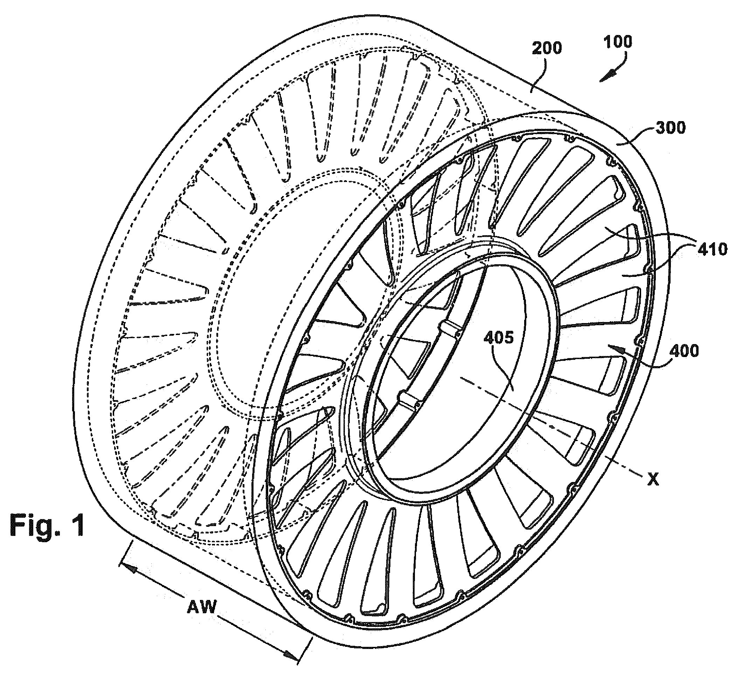

The non-pneumatic tire 100 of the present invention is shown in Figure 1. The tire of the present invention includes a radially outer ground engaging tread 200, a shear band 300, and one or more spoke disks 400. The non-pneumatic tire of the present invention is designed to be a top loading structure, so that the shear band 300 and the one or more spoke disks 400 efficiently carry the load. The shear band 300 and the spoke disks 400 are designed so that the stiffness of the shear band is directly related to the spring rate of the tire. The spokes of each disk are designed to be stiff structures that buckle or deform in the tire footprint and do not compress or carry a compressive load. This allows the rest of the spokes not in the footprint area the ability to carry the load. Since there are more spokes outside of the footprint than in, the load per spoke would be small enabling smaller spokes to carry the tire load which gives a very load efficient structure. Not all spokes will be able to elastically buckle and will retain some portion of the load in compression in the footprint. It is desired to minimize this load for the reason above and to allow the shearband to bend to overcome road obstacles. The approximate load distribution is such that approximately 90-100% of the load is carried by the shear band and the upper spokes, so that the lower spokes carry virtually zero of the load, and preferably less than 10%.

The tread portion 200 may have no grooves or may have a plurality of longitudinally oriented tread grooves forming essentially longitudinal tread ribs there between. Ribs may be further divided transversely or longitudinally to form a tread pattern adapted to the usage requirements of the particular vehicle application. Tread grooves may have any depth consistent with the intended use of the tire. The tire tread 200 may include elements such as ribs, blocks, lugs, grooves, and sipes as desired to improve the performance of the tire in various conditions.

SHEAR BAND

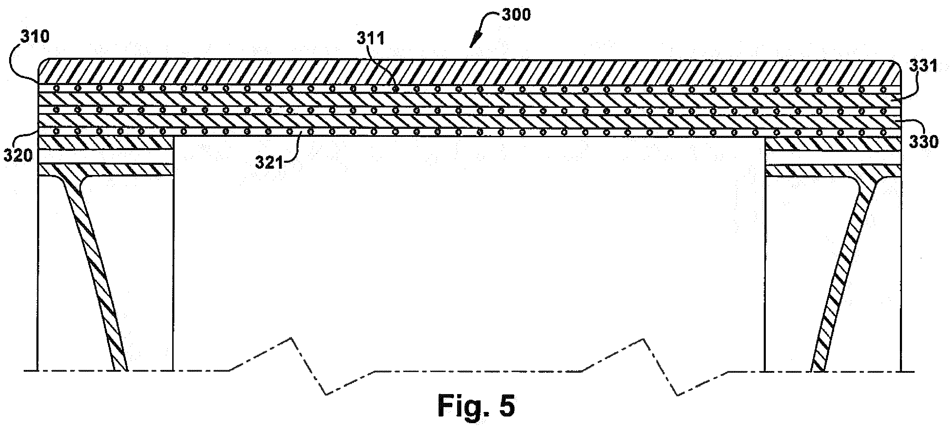

The shear band 300 is preferably annular, and is shown in Figure 5. The shear band 300 is located radially inward of the tire tread 200. The shear band 300 includes a first and second reinforced elastomer layer 310, 320. In a first embodiment of a shear band 300, the shear band is comprised of two inextensible layers arranged in parallel, and separated by a shear matrix 330 of elastomer. Each inextensible layer 310, 320 may be formed of parallel inextensible reinforcement cords 311, 321 embedded in an elastomeric coating. The reinforcement cords 311, 321 may be steel, aramid, or other inextensible structure. In a second embodiment of the shear band, the shear band 300 further includes a third reinforced elastomer layer located between the first and second reinforced elastomer layers 310, 320.

In the first reinforced elastomer layer 310, the reinforcement cords 311 are oriented at an angle Φ in the range of 0 to about +/- 10 degrees relative to the tire equatorial plane. In the second reinforced elastomer layer 320, the reinforcement cords 321 are oriented at an angle φ in the range of 0 to about +/- 10 degrees relative to the tire equatorial plane. Preferably, the angle Φ of the first layer is in the opposite direction of the angle φ of the reinforcement cords in the second layer. That is, an angle + Φ in the first reinforced elastomeric layer and an angle - φ in the second reinforced elastomeric layer.

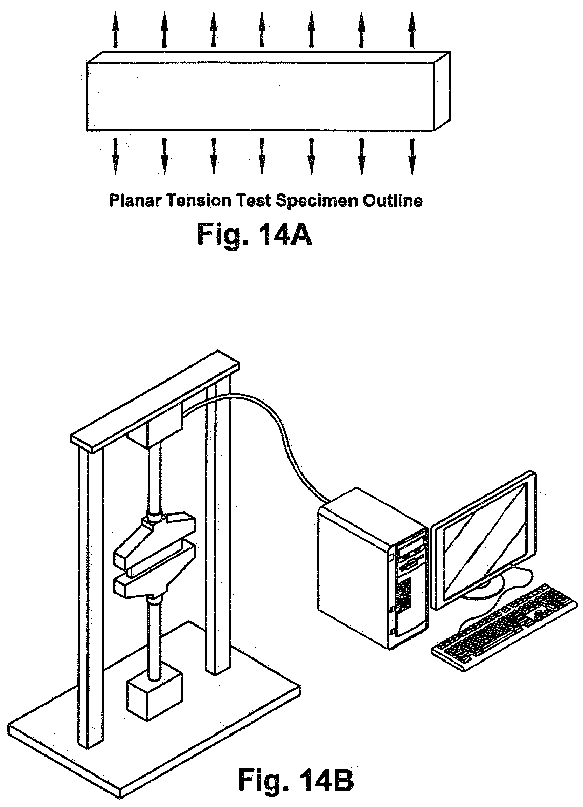

The shear matrix 330 has a thickness in the range of from 2.54 mm to 5.08 mm, more preferably about 3.81 mm. The shear matrix is preferably formed of an elastomer material having a shear modulus G in the range of from 2.5 to 40 MPa, and more preferably in the range of from 20 to 40 MPa. The shear modulus G is determined using the pure shear test, as shown in Figure 14.

The shear band has a shear stiffness GA. The shear stiffness GA is determined by measuring the deflection on a shear band from a force F as shown below, and then calculating from the following equation:

$$GA = F*L/\Delta X$$

The shear band has a bending stiffness EI. The bending stiffness EI is be determined from beam mechanics using the three point bending test. It represents the case of a beam resting on two roller supports and subjected to a concentrated load applied in the middle of the beam. The bending stiffness EI is determined from the following equation: $EI = PL^3/48* \Delta X$, where P is the load, L is the beam length, and $\Delta X$ is the deflection.

It is desirable to maximize the bending stiffness of the shearband EI and minimize the shear band stiffness GA. The acceptable ratio of GA/EI would be between 0.01 and 20, with an ideal range between 0.01 and 5. EA is the extensible stiffness of the shear band, and it is determined experimentally by applying a tensile force and measuring the change in length. The ratio of the EA to EI of the shearband is acceptable in the range of 0.02 to 100 with an ideal range of 1 to 50.

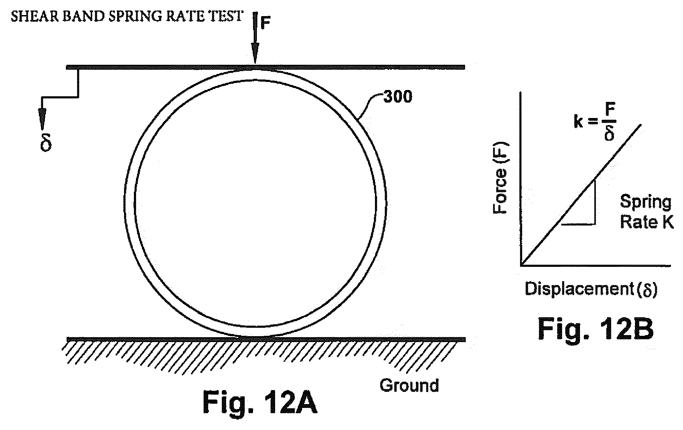

The shear band has a spring rate k that may be determined experimentally by exerting a downward force on a horizontal plate at the top of the shear band and measuring the amount of deflection as shown in Figure 12. The spring rate is determined from the slope of the Force versus deflection curve.

In an alternative embodiment, the shear band may comprise any structure which has the above described ratios of GA/EI, EA/EI and spring rate. The tire tread is preferably wrapped about the shear band and is preferably integrally molded to the shear band.

SPOKE DISK

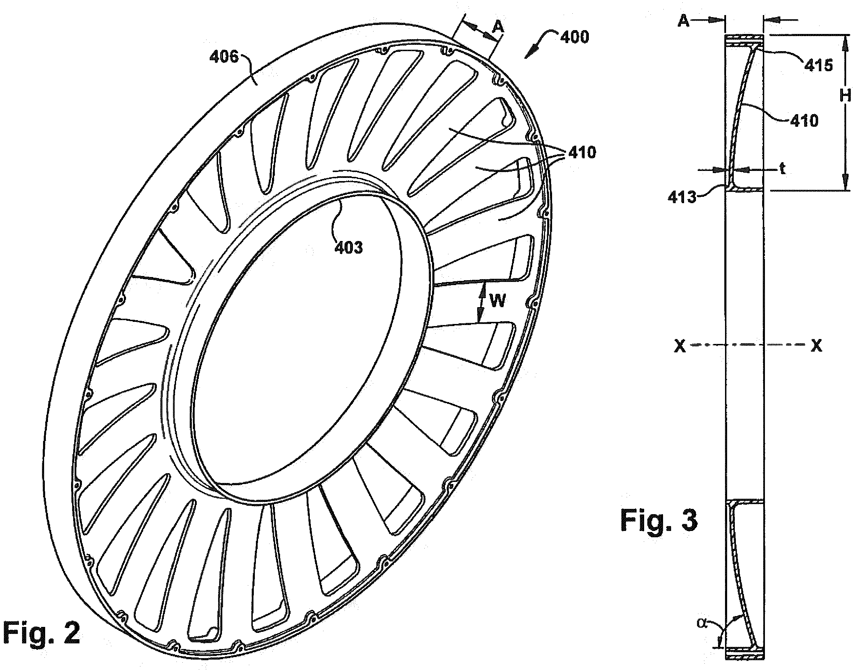

The non-pneumatic tire of the present invention further includes at least one spoke disk 400, and preferably at least two disks 400 which are spaced apart at opposed ends of the non-pneumatic tire as shown in Figures 1, 9 and 10. The spoke disk 400 functions to carry the load transmitted from the shear layer. The disks are primarily loaded in tension and shear, and carry no load in compression. As shown in Figure 2, the disk 400 is annular, and has an outer edge 406 and an inner edge 403 for receiving a metal or rigid reinforcement ring 405 to form a hub. Each disk 400 has an axial thickness A that is substantially less than the axial thickness AW of the non-pneumatic tire. The axial thickness A is in the range of 5-20% of AW, more preferably 5-10% AW. If more than one disk is utilized, than the axial thickness of each disk may vary or be the same.

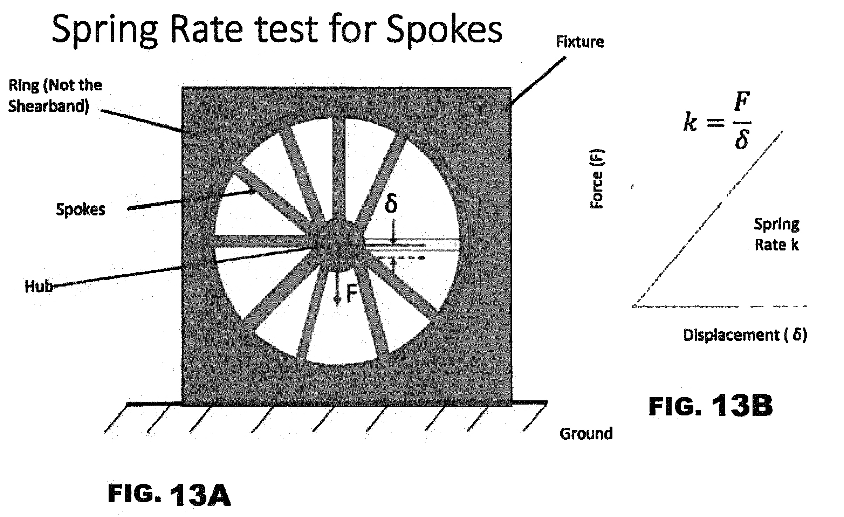

Each spoke disk 400 has a spring rate SR which may be determined experimentally by measuring the deflection under a known load, as shown in Figure 13a. One method for determining the spoke disk spring rate k is to mount the spoke disk to a hub, and attaching the outer ring of the spoke disk to a rigid test fixture. A downward force is applied to the hub, and the displacement of the hub is recorded. The spring rate k is determined from the slope of the force deflection curve as shown in Figure 13b. It is preferred that the spoke disk spring rate be greater than the spring rate of the shear band. It is preferred that the spoke disk spring rate be in the range of 4 to 12 times greater than the spring rate of the shear band, and more preferably in the range of 6 to 10 times greater than the spring rate of the shear band.

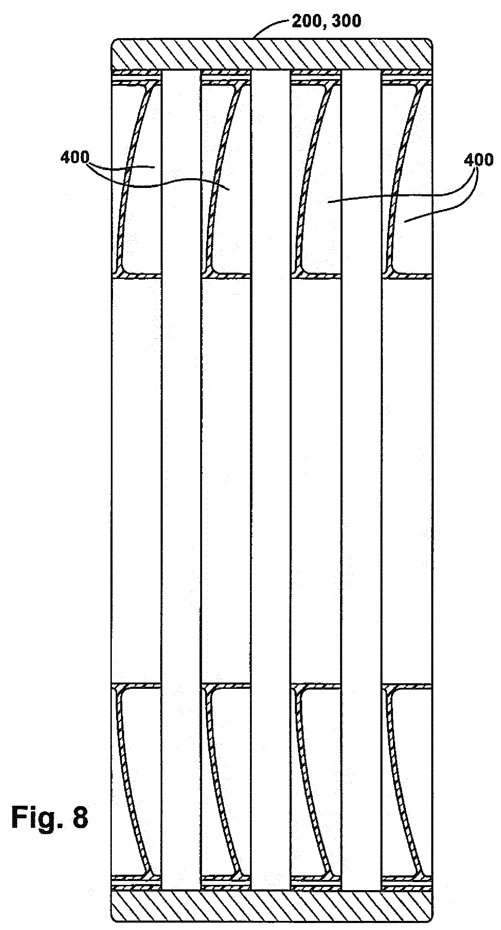

Preferably, if more than one spoke disk is used, all of the spoke disks have the same spring rate. The spring rate of the non-pneumatic tire may be adjusted by increasing the number of spoke disks as shown in Figure 8. Alternatively, the spring rate of each spoke disk may be different by varying the geometry of the spoke disk or changing the material. It is additionally preferred that if more than one spoke disk is used, that all of the spoke disks have the same outer diameter.

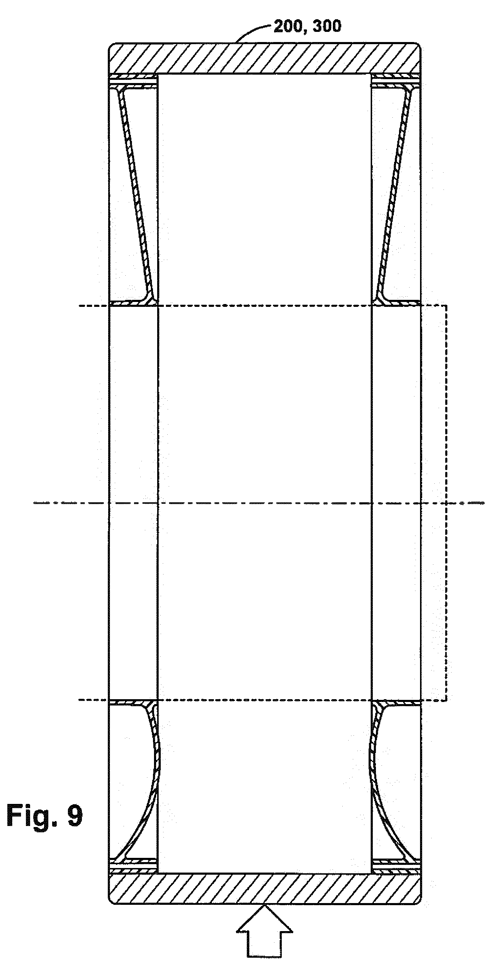

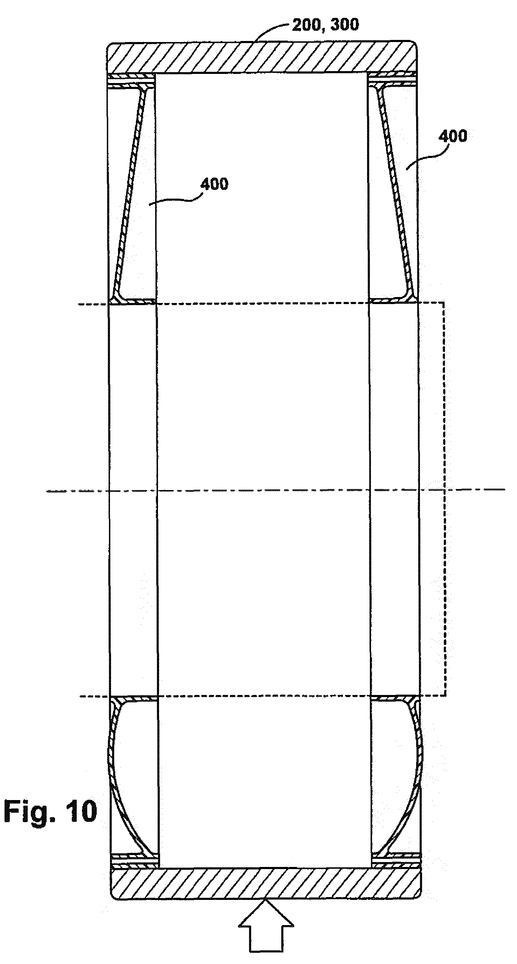

Figure 8 illustrates an alternate embodiment of a non-pneumatic tire having multiple spoke disks 400. The spokes 410 preferably extend in the radial direction. The spoke disks 400 are preferably oriented so that all of the spoke disks bend in the same direction. The spokes of the present invention are designed to bulge or deform in an axial direction, so that each spoke deforms axially outward as shown in Figure 10 or axially inward as shown in Figure 9. If only two spoke disks are used, the spoke disks may be oriented so that each spoke disk bulges or deforms axially inward as shown in Figure 9, or the opposite orientation such that the spoke disks bulge axially outward as shown in Figure 10. When the non-pneumatic tire is loaded, the spokes will deform or axially bow when passing through the contact patch with substantially no compressive resistance, supplying zero or insignificant compressive force to load bearing. The predominant load of the spokes is through tension and shear, and not compression.

The spokes have a rectangular cross section as shown in Figure 1, but are not limited to a rectangular cross-section, and may be round, square, elliptical, etc. Preferably, the spoke cross-sectional geometry is selected for longitudinal buckling, and preferably have a spoke width W to spoke axial thickness ratio, W/t, in the range of 15 to 80, and more preferably in the range of 30 to 60 and most preferably in the range of 45 to 55. A unique aspect of the preferred rectangular spoke design is the ability of the spokes to carry a shear load, which allows the spring stiffness to be spread between the spokes in tension and in shear loading. This geometric ability to provide shear stiffness is the ratio between the spoke thickness t and the radial height H of the spoke. The preferred ratio of H/t is in the range of 2.5 and 25 and more preferably in the range of 10 to 20, and most preferably in the range of 12-17.

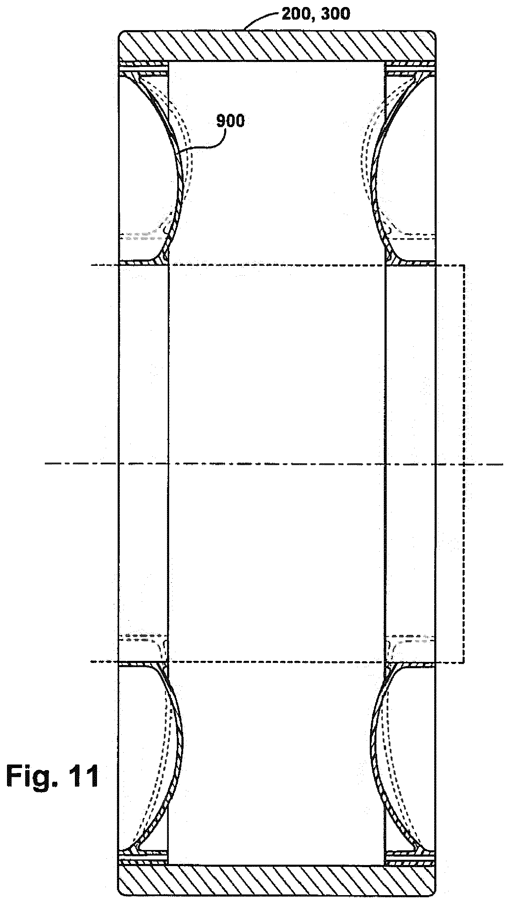

The spokes preferably are angled in the radial plane at an angle alpha as shown in Fig 3. The angle alpha is preferably in the range of 60 to 88 degrees, and more preferably in the range of 70 to 85 degrees. Additionally, the radially outer end 415 is axially offset from the radially inner end 413 of spoke 410 to facilitate the spokes bowing or deforming in the axial direction. Alternatively, the spokes 900 may be curved as shown in Fig 11.

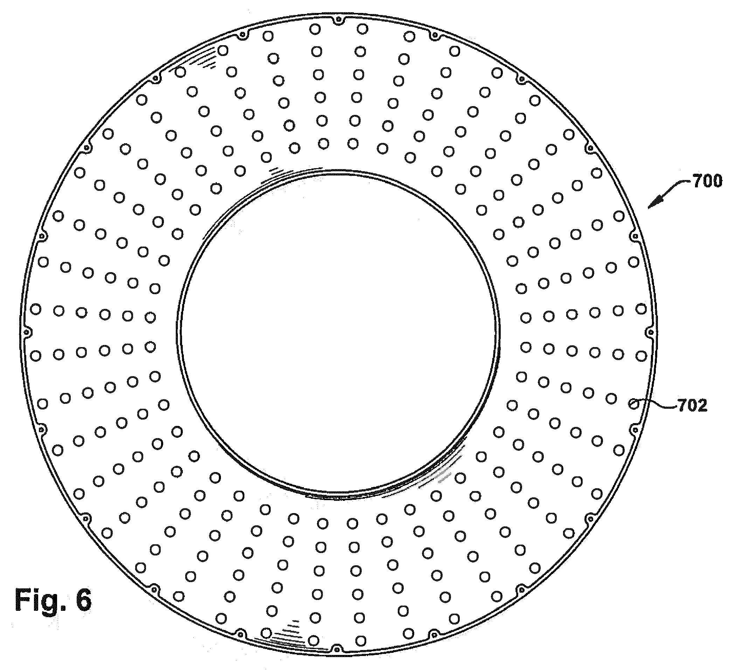

Figure 6 is an alternate embodiment of a spoke disk 700. The spoke disk is annular, and primarily solid with a plurality of holes 702. The holes may be arranged in rows oriented in a radial direction.

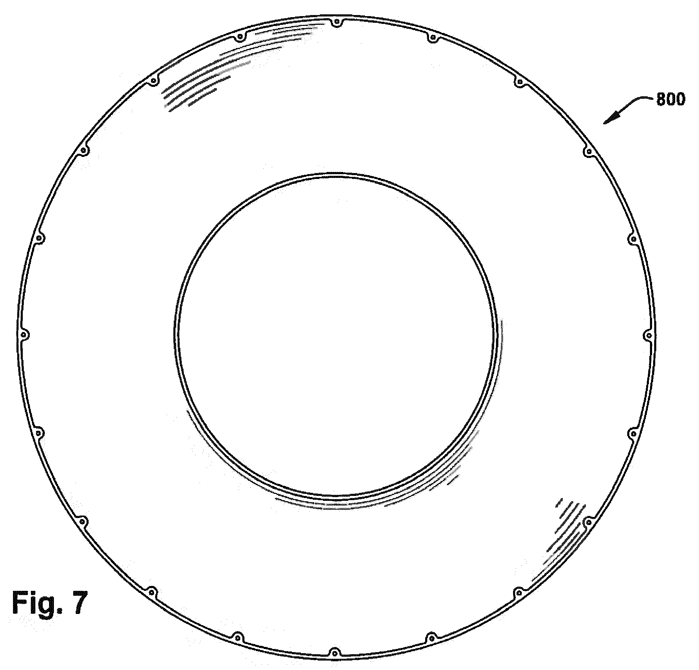

Figure 7 is an alternate embodiment of a spoke disk 800. The spoke disk in annular and solid, with no holes. The cross-section of the spoke disk 700, 800 is the same as Fig. 3. The spoke disks 700, 800 have the same thickness, axial width as shown in Figure 3.

The spoke disks are preferably formed of an elastic material, more preferably, a thermoplastic elastomer. The material of the spoke disks is selected based upon one or more of the following material properties. The tensile (Young's) modulus of the disk material is preferably in the range of 45 MPa to 650 MPa, and more preferably in the range of 85 MPa to 300 MPa, using the ISO 527-1/-2 standard test method. The glass transition temperature is preferably less than -25 degree Celsius, and more preferably less than -35 degree Celsius. The yield strain at break is preferably more than 30%, and more preferably more than 40%. The elongation at break is preferably more than or equal to the yield strain, and more preferably, more than 200%. The heat deflection temperature is preferably more than 40 degree C under 0.45 MPa, and more preferably more than 50 degree C under 0.45 MPa. No break result for the Izod and Charpy notched test at 23 degree C using the ISO 179/ISO180 test method. Two suitable materials for the disk is commercially available by DSM Products and sold under the trade name ARNITEL PM 420 and ARNITEL PI461.

## Claims

1. A structurally supported non-pneumatic tire comprising a ground contacting annular tread portion (200), a shear band (300) and at least one spoke disk (400) connected to the shear band (300), wherein the spoke disk (400) has at least one spoke (410), and wherein at least one or all of the following statements is true for the non-pneumatic tire (100):

   (i) the spring rate of the spoke disk (400) is greater than the spring rate of the shear band (300);
(ii) the spoke (410) has a width (W) and an axial thickness (t), the ratio of W/t being in the range of from 15 to 80;
(ii) the spoke (410) has an axial thickness less than the axial thickness of the spoke disk (400).

2. The non-pneumatic tire of claim 1 wherein the spoke (410) has an axial thickness less than the axial thickness of the spoke disk (400) and/or less than the width of the spoke (410).

3. The non-pneumatic tire of claim 1 or 2 further comprising a second spoke disk, wherein each spoke disk is located on each axial end of the non-pneumatic tire (100).

4. The non-pneumatic tire of claim 3 wherein the spoke disks have the same stiffness and/or the same outer diameter.

5. The non-pneumatic tire of claim 3 or 4 wherein the spoke disks are made of the same material.

6. The non-pneumatic tire of at least one of the previous claims wherein the spoke disk (400) has a plurality of holes arranged in radially oriented rows.

7. The non-pneumatic tire of at least one of the previous claims wherein the ratio of the axial thickness of the non-pneumatic tire (AW) to the axial thickness of the spoke disk (A) is in the range of from 4 to 10, preferably of from 6 to 8.

8. The non-pneumatic tire of at least one of the previous claims wherein the spokes (410) are angled at an angle alpha with respect to the axial direction in the range of from 60-80 degrees.

9. The non-pneumatic tire of at least one of the previous claims wherein the ratio (W/t) of the width (W) of each spoke (410) to the axial thickness (t) of each spoke (410) is in the range of from 15 to 80, preferably from 25 to 50 or from 30 to 60.

10. The non-pneumatic tire of at least one of the previous claims wherein the ratio of the height (H) of each spoke (410) to the axial thickness (t) of each spoke 9410) is in the range of from 2.5 to 25, preferably from 5 to 15.

11. The non-pneumatic tire of at least one of the previous claims wherein the spoke radially outer end is axially offset from the radially inner end of the spoke (410) and/or wherein the spoke (410) is curved from the radially outer end to the radially inner end.

12. The non-pneumatic tire of at least one of the previous claims wherein a spoke (410) of the spoke disk (400) has a rectangular cross-section.

13. The non-pneumatic tire of at least one of the previous claims wherein the spring rate of the spoke disk(s) (400) is in the range of 4 to 12 times greater than the spring rate of the shear band (300).

14. The non-pneumatic tire of at least one of the previous claims wherein there are a plurality of spoke disks (400), and wherein the spring rate of all of the spoke disks (400) is greater than the spring rate of the shear band (300).

15. The non-pneumatic tire of at least one of the previous claims wherein the ratio of the spoke disk axial thickness (A) to the spoke axial thickness (t) is in the range of from 6 to 11.

Fig. 1

EP 3 144 159 A1

Fig. 3

Fig. 2

Fig. 4

**Fig. 5**

700

702

Fig. 6

Fig. 7

200, 300

400

400

Fig. 8

**200, 300**

**Fig. 9**

**200, 300**

**400**

**400**

**Fig. 10**

Fig. 11

SHEAR BAND SPRING RATE TEST $\downarrow$F

300

$\delta$

**Fig. 12A**

Ground

$$k = \frac{F}{\delta}$$

Force (F)

Spring
Rate K

Displacement($\delta$)

**Fig. 12B**

# Spring Rate test for Spokes

Ring (Not the Shearband)

Fixture

Spokes

Hub

$\delta$

F

Ground

**FIG. 13A**

$$k = \frac{F}{\delta}$$

Force (F)

Spring Rate k

Displacement ($\delta$)

**FIG. 13B**

Planar Tension Test Specimen Outline

# Fig. 14A

# Fig. 14B

TIRE SPRING RATE

Shearband

Spokes

Hub

$\delta$

F

Ground

**FIG. 15A**

Force (F)

$$k = \frac{F}{\delta}$$

Spring
Rate k

Displacement ( $\delta$ )

**FIG. 15B**

Europäisches
Patentamt

European
Patent Office

Office européen
des brevets

# EUROPEAN SEARCH REPORT

Application Number

EP 16 18 6801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y<br><br>A | WO 03/018332 A1 (MICHELIN SOC TECH [FR]; MICHELIN RECH TECH [CH]; RHYNE TIMOTHY B [US];) 6 March 2003 (2003-03-06)<br>* paragraphs [0068] - [0070], [0083]; figures * | 1,2,7,8, 10,12, 13,15<br>3-5,13, 14<br>9,11 | INV.<br>B60B3/02<br>B60B3/08<br>B60C7/12<br>B60C7/18<br>B60C7/08<br>B60C7/14 |
| X<br><br>A | CH 254 693 A (MEILI ERNST [CH]) 15 May 1948 (1948-05-15)<br>* page 1 - page 2; figures 1-3 * | 1,2,6, 10-13,15<br>3-5,7,9, 14 | |
| X<br><br>A | JP 2015 113080 A (TOYO TIRE & RUBBER CO) 22 June 2015 (2015-06-22)<br>* figures * | 1,2,8, 10-12,15<br>3-7,9, 13,14 | |
| X<br><br>Y<br>A | JP 2015 151009 A (TOYO TIRE & RUBBER CO) 24 August 2015 (2015-08-24)<br>* figures * | 1,2, 9-12,15<br>6<br>3-5,7,8, 13,14 | TECHNICAL FIELDS SEARCHED (IPC)<br><br>B60B<br>B60C |
| X,P | WO 2016/126983 A1 (ADVANCING MOBILITY LLC [US]) 11 August 2016 (2016-08-11)<br>* page 13, lines 20-23; figures 1-9,19-24,26 *<br>* page 20, lines 22-26 * | 1,12,13 | |
| X,P | EP 3 045 322 A2 (SUMITOMO RUBBER IND [JP]) 20 July 2016 (2016-07-20)<br>* the whole document * | 1,2,7,12 | |
| Y<br><br>A | US 2011/260525 A1 (DELFINO ANTONIO [CH] ET AL) 27 October 2011 (2011-10-27)<br>* paragraph [0011] - paragraph [0147]; figure 5 * | 3-5,13, 14<br>1 | |

-/--

The present search report has been drawn up for all claims

| Place of search | Date of completion of the search | Examiner |
|---|---|---|
| Munich | 31 January 2017 | Jung, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ...............................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 16 18 6801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 97/02960 A1 (ELITE GOLF PRODUCTS LIMITED [GB]; WALTERS BRIAN THOMAS GEORGE [GB]; TE) 30 January 1997 (1997-01-30) | 6 | |
| A | * the whole document * | 1 | |

TECHNICAL FIELDS
SEARCHED      (IPC)

The present search report has been drawn up for all claims

| Place of search | Date of completion of the search | Examiner |
|---|---|---|
| Munich | 31 January 2017 | Jung, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 16 18 6801

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-15

   A structurally supported non-pneumatic tire comprising a ground contacting annular tread portion (200), a shear band (300) and at least one spoke disk (400) connected to the shear band (300), wherein the spoke disk (400) has at least one spoke (410), and wherein (i) the spring rate of the spoke disk (400) is greater than the spring rate of the shear band (300).

1.1. claims: 2-15(completely); 1(partially)

   A structurally supported non-pneumatic tire comprising a ground contacting annular tread portion (200), a shear band (300) and at least one spoke disk (400) connected to the shear band (300), wherein the spoke disk (400) has at least one spoke (410), and wherein (ii) the spoke (410) has a width (W) and an axial thickness (t), the ratio of W/t being in the range of from 15 to 80.

1.2. claims: 2-15(completely); 1(partially)

   A structurally supported non-pneumatic tire comprising a ground contacting annular tread portion (200), a shear band (300) and at least one spoke disk (400) connected to the shear band (300), wherein the spoke disk (400) has at least one spoke (410), and wherein (iii) the spoke (410) has an axial thickness less than the axial thickness of the spoke disk (400).

   ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 16 18 6801

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2017

| Patent document cited in search report | | Publication date | Patent family member(s) | | Publication date |
|---|---|---|---|---|---|
| WO 03018332 | A1 | 06-03-2003 | AT | 378193 T | 15-11-2007 |
| | | | CA | 2458002 A1 | 06-03-2003 |
| | | | CN | 1545454 A | 10-11-2004 |
| | | | DE | 60131469 T2 | 18-09-2008 |
| | | | EP | 1420964 A1 | 26-05-2004 |
| | | | JP | 4855646 B2 | 18-01-2012 |
| | | | JP | 2005500932 A | 13-01-2005 |
| | | | KR | 20040027984 A | 01-04-2004 |
| | | | MX | PA04001568 A | 17-05-2004 |
| | | | US | 2004159385 A1 | 19-08-2004 |
| | | | WO | 03018332 A1 | 06-03-2003 |
| CH 254693 | A | 15-05-1948 | NONE | | |
| JP 2015113080 | A | 22-06-2015 | NONE | | |
| JP 2015151009 | A | 24-08-2015 | NONE | | |
| WO 2016126983 | A1 | 11-08-2016 | NONE | | |
| EP 3045322 | A2 | 20-07-2016 | CN | 105774406 A | 20-07-2016 |
| | | | EP | 3045322 A2 | 20-07-2016 |
| | | | JP | 2016130071 A | 21-07-2016 |
| | | | KR | 20160087334 A | 21-07-2016 |
| | | | US | 2016200144 A1 | 14-07-2016 |
| US 2011260525 | A1 | 27-10-2011 | AT | 529271 T | 15-11-2011 |
| | | | EP | 2265446 A2 | 29-12-2010 |
| | | | FR | 2928865 A1 | 25-09-2009 |
| | | | US | 2011260525 A1 | 27-10-2011 |
| | | | WO | 2009135561 A2 | 12-11-2009 |
| WO 9702960 | A1 | 30-01-1997 | AU | 6463096 A | 10-02-1997 |
| | | | WO | 9702960 A1 | 30-01-1997 |
| | | | ZA | 9605872 B | 12-01-1998 |

EPO FORM P0459

For more details about this annex : see Official Journal of the European Patent Office, No. 12/82